# EUROPEAN PATENT SPECIFICATION

(11) **EP 3 995 280 B1**
(45) Date of publication and mention of the grant of the patent: **21.06.2023**
(21) Application number: 19934393.0
(22) Date of filing: 05.07.2019
(51) Int. Cl.: B29C 45/14, B29C 33/12, B32B 27/20, B32B 15/20, B32B 27/34, B32B 3/08, B32B 15/088

(54) **METAL-RESIN COMPOSITE PRODUCTION METHOD**
VERFAHREN ZUR HERSTELLUNG EINES METALL-HARZ-VERBUNDSTOFFS
PROCÉDÉ DE PRODUCTION DE COMPOSITE MÉTAL-RÉSINE

(43) Date of publication of application: 11.05.2022
(73) Proprietor: NISSAN MOTOR Co., Ltd., Yokohama-shi, Kanagawa 221-0023 (JP); Renault s.a.s, 92100 Boulogne Billancourt (FR)
(72) Inventor: ODA, Takashi, Kanagawa 243-0123 (JP); KOYAMA, Masaki, Kanagawa 243-0123 (JP)
(74) Representative: Grünecker Patent- und Rechtsanwälte PartG mbB
(86) International application number: PCT/IB2019/000672
(87) International publication number: WO 2021/005391

(56) References cited:
- EP-A1- 1 940 653
- WO-A1-02/02292
- WO-A1-2013/068586
- CN-A- 105 196 473
- DE-A1-102010 014 503
- DE-A1-102015 209 519
- JP-A- H0 788 881
- JP-A- 2004 174 865
- JP-A- 2004 174 865
- JP-A- 2006 151 042
- JP-A- 2007 062 118
- JP-A- 2007 062 118
- JP-A- 2009 513 437
- US-A- 1 482 232
- US-A1- 2002 074 688
- US-A1- 2008 127 479
- US-A1- 2014 363 623
- "LOCATOR TO POSITION AND RETAIN PART IN INJECTION MOLDING TOOL", RESEARCH DISCLOSURE, KENNETH MASON PUBLICATIONS, HAMPSHIRE, UK, GB, no. 356, 1 December 1993 (1993-12-01), page 781, XP000425380, ISSN: 0374-4353

## Description

### TECHNICAL FIELD

The present invention relates to a method for manufacturing a metal-resin composite of a metal plate and a thermoplastic resin. In more detail, the present invention relates to a method for manufacturing a metal-resin composite that is unlikely to have a peeling start point of a thermoplastic resin.

### BACKGROUND ART

Composites of resin and a metal member are used in automobile components in order to reduce vehicle weight. The resin and the metal member are bonded together mostly by an adhesive agent.

Many adhesive agents for bonding resin and a metal member together have been developed, but the adhesive agent, which is held between the metal member and the resin, is prone to break and peel off due to residual shear stress that is generated by the difference in thermal contraction rate between the metal member and the resin.

In other cases, a through hole is formed in a metal member, and a thermoplastic resin is provided through the through hole, continuously from one side surface of the metal member to the other side surface of the metal member, whereby the metal member and the thermoplastic resin are bonded together. However, forming the through hole in the metal member causes the thermoplastic resin to be exposed at a design surface that constitutes the external appearance of the metal-resin composite, and thus, design is deteriorated.

In yet other cases, the surface of the metal member is roughened by sand blasting or the like, so as to improve bonding strength between the metal member and the resin. However, dents that are formed by sand blasting have bowl shapes with an opening diameter larger than the diameter of the bottom and do not exhibit a large anchoring effect. Thus, the resin easily peels off in response to deflection of the metal member. The dents are unsuitable for bonding between a resin and a thin metal plate that is prone to deflect.

Patent Document 1, JP 2009-292034A, discloses a composite of a metal member and a resin that are directly bonded together, in which the metal member has a surface that is formed in an ultrafine uneven shape. Patent Document 2, EP 1 940 653 A1, discloses a method of forming the panel structure. The panel structure typically includes at least one panel or support associated with an activatable material. Patent Document 3, DE 10 2015 209519 A1, discloses a method for producing a composite component with a fiber-reinforced plastic component and a metal part. The composite component comprises a fiber-reinforced plastic component and a metal part for producing a mechanical fastening, which is non-positively, materially and/or positively connected to the fiber-reinforced plastic, the composite component has at least one connecting device for mechanically fastening a seat to the composite component. DE 10 2010 014503 A1 relates to a structural component for a motor vehicle, having at least one carrier part, in particular an FRP or metal carrier part, which is reinforced at least in some areas by a plastic stiffening structure to form a hybrid component, with at least one chamber of the hybrid component is at least partially delimited by the stiffening structure, wherein a further plastic, in particular a foam, is arranged in the at least one chamber.

### CITATION LIST

### Patent document

Patent Document 1: JP 2009-292034A
Patent Document 2: EP 1 940 653 A1
Patent Document 3: DE 10 2015 209519 A1
Patent Document 4: DE 10 2010 014503 A1

### SUMMARY OF INVENTION

### Technical Problem

However, in the composite disclosed in Patent Document 1, the ultrafine uneven shape is formed on the surface of the metal member in order to bond to the resin and also in order to provide decoration such as a pear-skin finished surface formed on the surface of the metal member. That is, this composite has a small bonding surface between the resin and the metal member and is not improved in strength.

One side surface of the metal member may be widely covered with a thermoplastic resin, so as to be reinforced. This enables obtaining sufficient strength even when the metal member is made of a thin metal plate, whereby it makes it possible to greatly reduce vehicle weight.

Meanwhile, the thin metal plate tends to deform due to the thin thickness and is difficult to press-form with high accuracy, and thus, the metal plate that is placed in a mold is easily distorted. In addition, in applying resin to the metal plate, the metal plate easily moves and tilts in a mold by injection pressure or pressing pressure, and it is difficult to apply thermoplastic resin to a desired position of the metal plate.

The metal plate may be pressed onto a mold to be maintained in a balanced state and be fixed at a predetermined position by using a metal pin that is implanted into the mold. This makes it possible to apply thermoplastic resin to a desired position of the metal plate.

However, a part in contact with the metal pin of the metal plate is not applied with the thermoplastic resin, and therefore, the thermoplastic resin easily peels off from the part in contact with the metal pin, resulting in reduction in strength.

The present invention has been made in view of such problems in the prior art. An object of the present invention is to provide a method for manufacturing a metal-resin composite including a metal plate and a thermoplastic resin that directly covers at least a part of one surface of the metal plate, which the composite is unlikely to have a peeling start point of the thermoplastic resin.

### Solution to Problem

The present invention is set out in the appended set of claims. The inventors of the present invention have conducted an intensive study in order to achieve the above object. As a result, the inventors of the present invention have found that the above object can be achieved by using a support member made of resin to support a metal plate and by bonding the support member to the metal plate in conjunction with a thermoplastic resin, and thus, the present invention has been completed.

That is, the present invention provides a method for manufacturing a metal-resin composite including a metal plate and a thermoplastic resin that directly covers at least a part of one surface of the metal plate.

The method includes a support member placing step of placing a resin support member for supporting the metal plate, in a mold, a metal plate placing step of placing the metal plate on the support member, and an integrating step of integrating the thermoplastic resin that is applied to a support member side of the metal plate, the support member, and the metal plate, into one body in the mold.

The present invention also provides a support member for use in molding a metal-resin composite that includes a metal plate and a thermoplastic resin that directly covers at least a part of one surface of the metal plate.

The support member is made of resin. The support member is configured to maintain a space between a mold and the metal plate to form a cavity in molding the metal-resin composite. The support member is configured to be partially embedded in the thermoplastic resin and to be integrated with the thermoplastic resin and the metal plate into one body after the thermoplastic resin is provided to the cavity and the metal-resin composite is molded.

Moreover, the present invention provides a metal-resin composite including a metal plate and a thermoplastic resin that directly covers at least a part of one surface of the metal plate.

The metal-resin composite further includes a resin support member that is in contact with the one surface of the metal plate. The support member penetrates through the thermoplastic resin to protrude therefrom. The metal-resin composite has an interface between the thermoplastic resin and the support member.

### Advantageous Effects of Invention

In the present invention, the resin support member for supporting the metal plate is bonded to the metal plate in conjunction with the thermoplastic resin, into one body, whereby a metal-resin composite that is unlikely to have a peeling start point of the thermoplastic resin is manufactured.

### BRIEF DESCRIPTION OF DRAWINGS

FIG. 1 is an explanatory diagram of an example of a manufacturing step of a metal-resin composite.
FIG. 2 is an explanatory diagram of an example of a manufacturing step of another metal-resin composite.
FIG. 3 is a SEM image of an aluminum surface.
FIG. 4 is a high-magnification SEM image of an aluminum surface.
FIG. 5 is a schematic enlarged sectional view of a bonded interface between a metal plate and a thermoplastic resin.
FIG. 6 is an explanatory diagram of an interface between the thermoplastic resin and a support member.
FIG. 7 is a perspective view illustrating an example of the shape of the support member.

### DESCRIPTION OF EMBODIMENTS

### <Manufacturing Method of Metal-Resin Composite>

A method for manufacturing a metal-resin composite of the present invention will be described in detail.

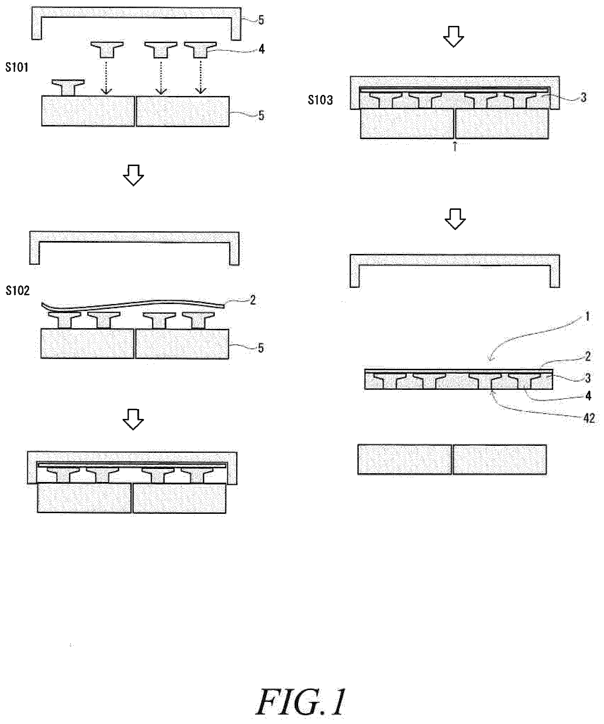

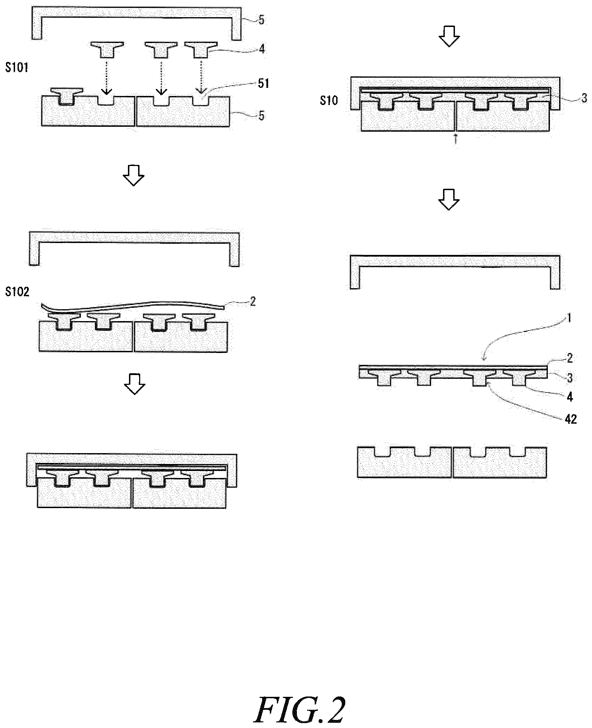

The manufacturing method is a method for manufacturing a metal-resin composite including a metal plate and a thermoplastic resin that directly covers at least a part of one surface of the metal plate. As illustrated in FIGs. 1 and 2, the manufacturing method includes a support member placing step S101, a metal-plate placing step S102, and an integrating step S103.

The support member placing step S101 involves placing a resin support member 4 for supporting the metal plate 2, in a mold 5. The metal-plate placing step S102 involves placing the metal plate 2 on the support member 4 that is placed in the mold 5.

The resin support member (which may be hereinafter simply referred to as a "support member".) that is placed in the mold presses the metal plate onto the mold and prevents the metal plate from being displaced. The support member maintains a space between the mold and the metal plate to form a desired cavity without causing the metal plate to move and tilt in the mold, whereby leakage of resin is prevented.

The support member should be placed so as to not easily move in the mold. Examples of the placing method are as follows. As illustrated in FIG. 1, the support member is fixed by closing the mold and holding it with the mold via the metal plate. Alternatively, as illustrated in FIG. 2, the support member 4 is inserted and fixed in a recess 51 that is provided in the mold 5.

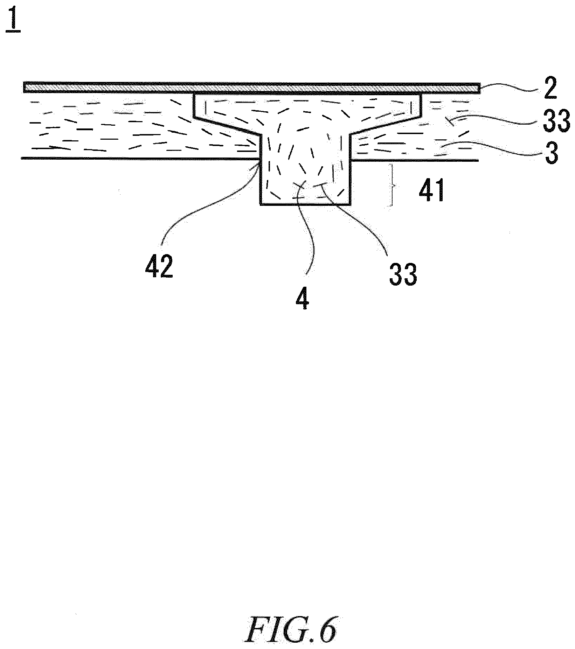

The method of inserting the support member 4 in the recess 51 enables simply and easily fixing the support member. In addition, after the metal-resin composite is molded, the part that is inserted in the recess 51 of the mold 5 protrudes from the thermoplastic resin 3, as illustrated in FIG. 6, and it serves as a reinforcing member, such as a rib or a boss, whereby strength of the metal-resin composite 1 is improved.

The support member presses the metal plate onto the mold to fix the metal plate in the integrating step, as described above. Upon coming into contact with the thermoplastic resin that is provided to the cavity in the state of being heated and having fluidity, the support member, which is made of resin, is softened at the surface and is bonded to the thermoplastic resin to be fixed to the metal plate. Thus, the support member constitutes a part of the metal-resin composite. In this manner, the support member is incorporated in the thermoplastic resin and is bonded to the metal plate. This prevents a part where the metal plate and the support member come into contact with each other, from being exposed and becoming a peeling start point of the thermoplastic resin.

Examples of the molding method for integrating the thermoplastic resin and the metal plate include an injection molding method, an injection press molding method, a resin transfer molding (RTM) method, and a long fiber thermoplastic-direct (LFT-D) molding method.

The injection pressing method involves injecting thermoplastic resin into a mold that is in a slightly opened state, completely closing the mold, pressing the thermoplastic resin to spread it over the whole cavity, and then molding. The thermoplastic resin, which is injected into the cavity in the melted state, closely adheres to the metal plate without leaving a space and is strongly bonded thereto. Thus, the injection press molding method is preferably used.

Specifically, a molded metal plate is placed in a mold, and thermoplastic resin is injected toward one surface side of the metal plate in the state in which the mold is slightly opened. Then, after the mold is completely closed, the thermoplastic resin is pressed in conjunction with the metal plate so as to spread over the whole cavity and to closely adhere to the metal plate, whereby a metal-resin composite is obtained.

In this injection pressing method, the thermoplastic resin is injected in the state in which the mold is slightly opened, and therefore, the metal plate tends to float and be dislocated. However, in the present invention, the metal plate is fixed by the support member, which prevents leakage of the resin.

The RTM method involves placing a dry fabric, such as of carbon, in a mold, closing the mold, injecting resin or monomer having good fluidity to spread it over the whole mold, and then heating the mold to cure the resin or monomer.

The LFT-D molding method involves putting thermoplastic resin and carbon fibers into a kneader, and melting and kneading the thermoplastic resin and the carbon fibers that are cut into appropriate lengths by shear force of a screw, to produce an LFT-D kneaded material (composite of thermoplastic resin and carbon fibers). The LFT-D molding method also involves press molding the kneaded material into a molded component before it is cooled.

The temperature of the mold in the integrating step is preferably higher at the vicinity of a part where the metal plate and the support member come into contact with each other, than the surrounding thereof. Having high temperature at the vicinity of the support member makes the support member be soft at the surface and be strongly bonded to the thermoplastic resin.

### (Thermoplastic Resin)

Examples of the thermoplastic resin include nylon 6, nylon 66, polyphenylene sulphide, polybutylene terephthalate, and polyphthalamide.

The thermoplastic resin may contain reinforcing fibers.

The reinforcing fibers are preferably carbon fibers having an average fiber diameter of 7 µm or larger and 15 µm or smaller and an average length of 0.1 mm or longer and 1 mm or shorter.

The thermoplastic resin, which contains the carbon fibers having the above-described ranges of dimensions, has fluidity and enables molding using the injection pressing method and obtaining a highly rigid metal-resin composite.

In addition, the thermoplastic resin preferably contains 30 mass % or more and 40 mass % or less of the carbon fibers. The carbon fibers in the amount satisfying the above-described range improve rigidity of the metal-resin composite.

That is, in the case in which the content of the carbon fibers exceeds 40 mass %, due to the large content of the carbon fibers having a high thermal conductivity, the kneaded material of the thermoplastic resin and the carbon fibers is cooled down to cause an increase in viscosity. This makes it difficult for the thermoplastic resin to enter the voids of the nano-porous structure, whereby filling defects can occur, and the thermoplastic resin can tend to peel off, resulting in reduction in rigidity of the metal-resin composite.

On the other hand, in the case in which the content of the carbon fibers is less than 30 mass %, the reinforcing effect of the carbon fibers is small, which reduces rigidity of the metal-resin composite.

Although depending on the type of the resin and the injection pressure, the viscosity of the thermoplastic resin at the time of injection pressing is preferably 30 Pa s or higher and 200 Pa s or lower, and more preferably, 30 Pa·s or higher and 50 Pa·s or lower.

The thermoplastic resin having a low viscosity easily enters the voids of the nano-porous structure, but the thermoplastic resin is thermally decomposed at such a temperature that it has a viscosity of less than 30 Pa·s, whereby bonding strength tends to be decreased.

### (Support Member)

The support member can use a resin similar to the thermoplastic resin, and its shape can be a pin shape or a block shape.

### (Metal Plate)

For example, a metal plate, such as of aluminum, iron, stainless steel, copper, titanium, magnesium, or brass, or a metal plate that is plated with such metal, can be used as the metal plate.

Although depending on the required strength, the metal plate having a thickness of 0.5 mm or larger and 2.5 mm or smaller enables great reduction in weight.

The metal plate is preferably roughened at least at a part that is covered with the thermoplastic resin, so as to have a porous structure 23 (which may be hereinafter referred to as a "nano-porous structure".) having an average opening diameter of 10 to 100 nm. The roughened metal plate 2 improves the bonding strength between the thermoplastic resin 3 and the metal plate 2.

The nano-porous structure 23 can be performed by immersing a metal plate in solution of ammonia, hydrazine, and/or water-soluble amine compound.

Specifically, a metal plate is immersed in a solution of 3 to 10 % hydrazine monohydrate that is heated to 40 to 70 °C, for some minutes, and it is then washed by water, whereby roughing with the nano-porous structure 23 can be performed.

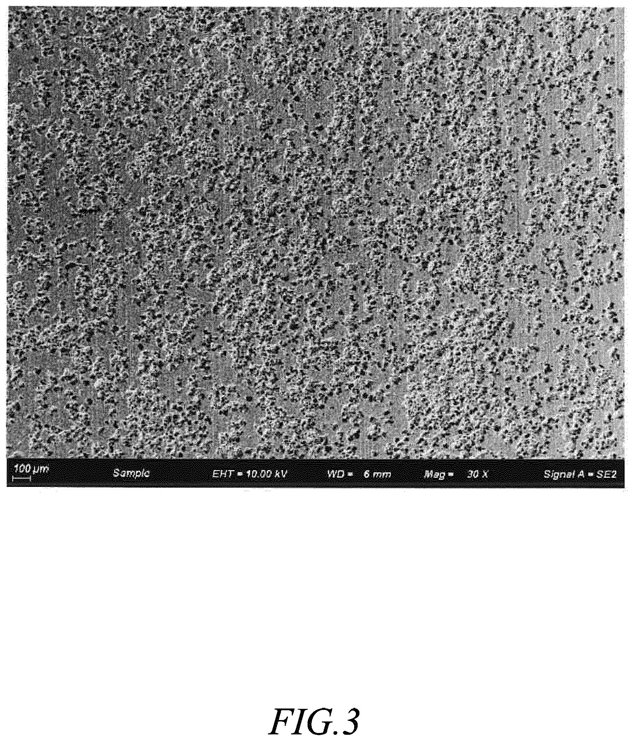

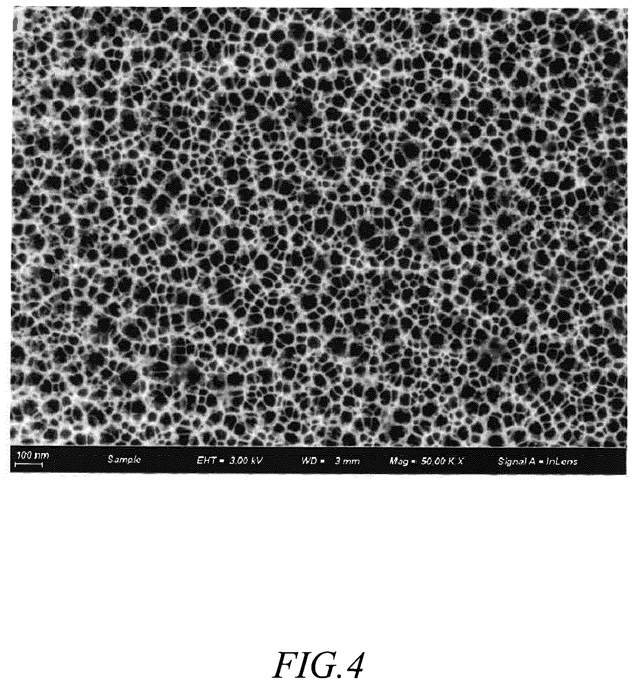

A SEM image of a surface of an aluminum plate that is roughened with the nano-porous structure is illustrated in FIG. 3, and a higher-magnification SEM image is illustrated in FIG. 4.

As illustrated in FIG. 3, multiple micron-sized pores having an opening diameter of 1 µm or larger and having an inside diameter greater than the opening diameter are formed to the nano-porous structure 23. In more detail, as illustrated by the high-magnification FIG. 4, multiple nano-sized pores having an opening diameter of 10 to 100 nm are formed to wall surfaces of the micron-sized pores.

The roughening treatment of the aluminum plate was performed as follows.

A 1-mm thick aluminum plate was immersed in an alkaline solution to be degreased and was then immersed in an acid solution to be neutralized. This aluminum plate was immersed in a solution of 5 % hydrazine monohydrate that was heated to 50 °C, for 5 minutes, and it was then washed by water and dried, whereby the surface was subjected to the roughening treatment.

This aluminum plate had a surface roughness (Ra) of 0.3 µm and an average opening diameter of 10 nm.

This aluminum plate was placed in a mold, pressed by an upper mold, and then heated to 280 °C. In the state in which the mold was slightly opened, a kneaded material of carbon fibers and nylon 6, which contained 35 mass % of carbon fibers having an average fiber diameter of 10 µm and an average length of 0.5 mm, was injected.

Then, the mold was completely closed and was pressed at 10 MPa, whereby a metal-resin composite having a resin thickness of 2 mm was obtained.

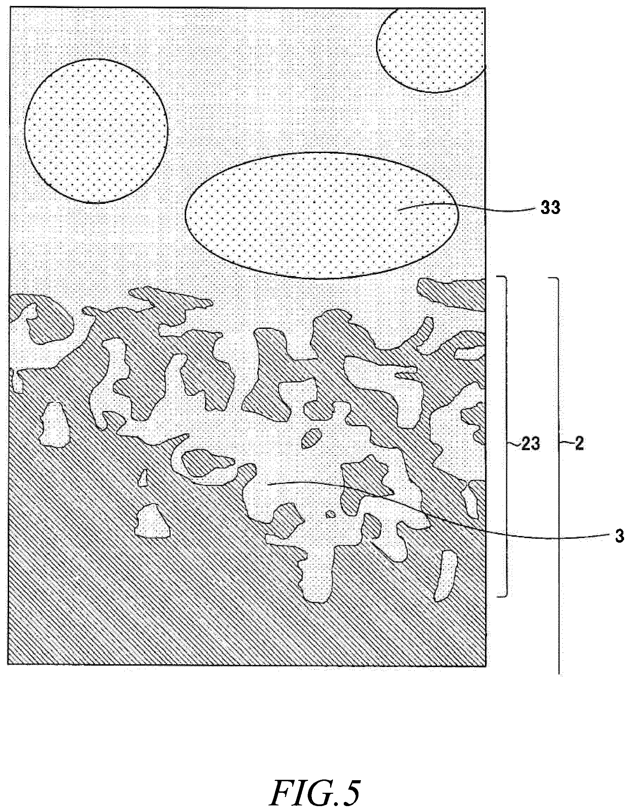

In a cross section of the metal-resin composite, as illustrated in FIG. 5, an ant-nest-like nano-porous structure was formed. The nano-porous structure had aluminum plate multiple micron-sized pores that communicate with each other in the inside to form internal voids. The thermoplastic resin 3 filled all of the voids of the nano-porous structure 23 and was impregnated to the depth of 100 nm without generating a filling defect.

Such a thermoplastic resin that is impregnated into the nano-porous structure does not peel off from the metal plate unless it breaks, and therefore, bonding strength is significantly improved.

### <Metal-Resin Composite>

Next, the metal-resin composite of the present invention will be described.

The metal-resin composite 1 includes a metal plate 2 and a thermoplastic resin 3 that directly covers at least a part of one surface of the metal plate. The metal-resin composite 1 further includes a resin support member 4 that is in contact with the one surface of the metal plate.

In molding the metal-resin composite, the support member supports the metal plate 2 to form a predetermined cavity between the metal plate and the mold, in the state of being held and fixed by the mold via the metal plate, and in the state of being inserted and fixed in the recess 51 of the mold 5.

The support member is softened at the surface by such as heat of the thermoplastic resin 3 that is provided to the cavity, whereby it is bonded to the thermoplastic resin 3.

The support member 4, which is in contact with the mold 5 and the metal plate 2, is bonded to the metal plate in the state of being embedded in the provided thermoplastic resin while penetrating therethrough, whereby it constitutes a part of the metal-resin composite 1.

In the case of being inserted in the recess 51 of the mold 5, the support member 4 protrudes from the thermoplastic resin, at the part that is inserted in the recess 51 of the mold.

The support member 4 that protrudes from the thermoplastic resin has a protruding part that serves as a reinforcing member, such as a rib or a boss, which improves strength of the metal-resin composite. Thus, the support member preferably protrudes from the thermoplastic resin.

The support member 4 is softened at the surface upon coming into contact with the thermoplastic resin that flows, and it is thus bonded to the thermoplastic resin. However, the support member 4 is not completely melted and is not perfectly combined with the thermoplastic resin into one body, and an interface 42 is formed between the thermoplastic resin and the support member.

The interface 42 between the thermoplastic resin 3 and the support member 4 can be recognized by observing a cross sectional structure using an N-ARC (New Analysis of Resin (Rubber) Cross section) method and visualizing flow marks of the thermoplastic resin at the time of molding and spherulite (crystal) structure.

In the case in which the thermoplastic resin contains the reinforcing fibers 33, as illustrated in FIG. 6, the reinforcing fibers 33 of the thermoplastic resin 3 are not impregnated into the support member 4 and are discontinuous at the interface 42 between the thermoplastic resin 3 and the support member 4.

The resin type of the support member 4 is preferably the same as that of the thermoplastic resin 3. The support member and the thermoplastic resin having the same type of resin have a high affinity with each other and are easily bonded together.

In the present invention, the phrase "the resin type is the same" means that the monomer component is the same and does not mean that the repetition unit of the main chain, in addition to the structure of the side chain and the molecular weight, are the same.

The melting point of the resin that composes the support member preferably differs from the melting point of the thermoplastic resin by 10 °C or less. The support member in which the melting point differs from that of the thermoplastic resin by 10 °C or less, is easily softened and bonded to the thermoplastic resin in molding the metal-resin composite.

The support member protrudes from the thermoplastic resin and has strength due to its shape. Thus, the support member is not required to have strength that originates from physical properties of resin, compared with the case of the thermoplastic resin. The support member therefore can use resin having molecular weight lower than that of the thermoplastic resin or flexible resin less prone to cause steric hindrance of a side chain. Such flexible resin generally has a melting point lower than that of the thermoplastic resin.

In the present invention, the melting point of resin means a heat absorption peak temperature of a DSC curve that is measured as follows: After a sample in the amount of approximately 10 mg is put in an aluminum pan, (i) the sample is heated to 200 °C at a rate of 100 °C/minute and is maintained at 200 °C for 5 minutes, (ii) the sample is then cooled to -50 °C at a rate of 10 °C/minute, and (iii) the sample is subsequently heated to 200 °C at a rate of 10 °C/minute. In these conditions, a DSC curve is measured at the second heating step (iii).

The support member is preferably formed so as to have a curved cross sectional shape in an in-plane direction of the thermoplastic resin, namely, in a direction in which the thermoplastic resin flows in molding.

Examples of the cross sectional shape include a circular shape, an elliptical shape, and a streamline shape.

Forming the support member so as to have a curved cross sectional shape reduces flow resistance of the thermoplastic resin in molding, resulting in preventing occurrence of a filling defect.

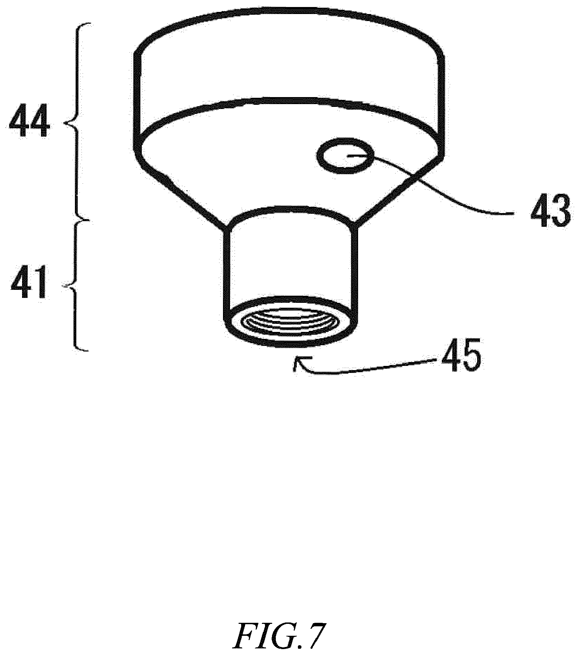

As illustrated in FIG. 7, a part 44 that is embedded in the thermoplastic resin of the support member may have a through hole 43 that penetrates in the in-plane direction of the thermoplastic resin. In this case, the thermoplastic resin flows into the through hole 43, whereby flow resistance is reduced, and moreover, coming off of the support member is prevented because the thermoplastic resin 3 and the support member 4 are bonded together at the through hole 43.

In addition, the part 44 that is embedded in the thermoplastic resin of the support member is thick on the metal plate side and becomes thinner as being separated from the metal plate or in a stepwise manner. Thus, the part 44 is caught by the thermoplastic resin and prevents the support member from coming off.

The support member is preferably formed of foamed resin or preferably has a hollowed structure.

The support member that has a hollowed structure or is formed of foamed resin, has small heat capacity, and thus, it easily rises in temperature to reduce the temperature difference from the thermoplastic resin that is applied therearound.

As a result, the difference in cooling rate between the thermoplastic resin and the support member after they are integrated into one body is decreased, and the difference in thermal contraction is also decreased. This prevents the support member from coming off from the metal plate, and in addition, the reduced heat capacity leads to a high cooling rate and improves production efficiency.

The foamed resin is a resin that is formed in a foamed state or a porous state by finely diffusing gas into thermoplastic resin.

In the support member, the thickness in the thinnest direction is preferably larger than the thickness of the thermoplastic resin. The support member that is thicker than the thermoplastic resin has improved strength at the part that protrudes from the thermoplastic resin, and the protruding part serves as a reinforcing member and improves strength of the metal-resin composite.

The support member 4 can have a female screw 45. Being strongly bonded to the thermoplastic resin and the metal plate, as described above, the support member having a screw hole facilitates coupling between the metal-resin composite and another member.

As described above, the method for manufacturing the metal-resin composite of the present invention enables manufacturing a metal-resin composite that is unlikely to have a peeling start point due to a support member for preventing dislocation of a metal plate in molding.

### REFERENCE SIGNS LIST

- 1: Metal-resin composite
- 2: Metal plate
- 23: Nano-porous structure
- 3: Thermoplastic resin
- 33: Reinforcing fibers
- 4: Support member
- 41: Protruding part
- 42: Interface
- 43: Through hole
- 44: Embedded part
- 45: Female screw
- 46: Reinforcing fibers
- 5: Mold
- 51: Recess

## Claims

1. A method for manufacturing a metal-resin composite including a metal plate and a thermoplastic resin that directly covers at least a part of one surface of the metal plate, the method comprising:
a support member placing step of placing a resin support member for supporting the metal plate, in a mold;
a metal plate placing step of placing the metal plate on the support member; and
an integrating step of integrating the thermoplastic resin that is applied to a support member side of the metal plate, the support member, and the metal plate, into one body in the mold,
**characterised in that**
the integrating step involves pressing the metal plate onto the mold by the support member to fix the metal plate.

2. The method for manufacturing the metal-resin composite according to claim 1, wherein the support member maintains a space between the mold and the metal plate to form a cavity.

3. The method for manufacturing the metal-resin composite according to claim 1 or 2, wherein the support member placing step involves directly placing the support member in the mold.

4. The method for manufacturing the metal-resin composite according to any one of claims 1 to 3, wherein the mold has a recess, and the support member placing step involves inserting the support member in the recess of the mold.

5. The method for manufacturing the metal-resin composite according to any one of claims 1 to 4, wherein a temperature of the mold in the integrating step is higher at a vicinity of a part where the metal plate and the support member come into contact with each other, than a surrounding thereof.

6. The method for manufacturing the metal-resin composite according to any one of claims 1 to 5, wherein the integrating step performs integration by a molding method that is selected from a group consisting of an injection molding method, an injection press molding method, an RTM method, and an LFT-D molding method.

## Patentansprüche

1. Ein Verfahren zur Herstellung eines Metall-Harz-Verbundwerkstoffs mit einer Metallplatte und einem thermoplastischen Harz, das mindestens einen Teil einer Oberfläche der Metallplatte direkt bedeckt, wobei das Verfahren umfasst:
einen Schritt des Anbringens eines Trägerelements, bei dem ein Harzträgerelement zum Tragen der Metallplatte in einer Form angebracht wird;
einen Schritt des Anbringens der Metallplatte in dem die Metallplatte auf dem Trägerelement platziert wird; und
einen Integrationsschritt des Integrierens des thermoplastischen Harzes, das auf eine Trägerelementseite der Metallplatte, des Trägerelements und der Metallplatte aufgetragen ist, in einen Körper in der Form,
**dadurch gekennzeichnet, dass** der Integrationsschritt das Pressen der Metallplatte auf die Form durch das Trägerelement umfasst, um die Metallplatte zu fixieren.

2. Das Verfahren zur Herstellung eines Metall-Harz-Verbundwerkstoffs gemäß Anspruch 1, wobei
das Trägerelement einen Raum zwischen der Form und der Metallplatte aufrechterhält, um einen Hohlraum zu bilden.

3. Das Verfahren zur Herstellung eines Metall-Harz-Verbundwerkstoffs gemäß Anspruch 1 oder 2, wobei
der Schritt des Anbringens des Trägerelements beinhaltet das direkte Einsetzen des Trägerelements in die Form.

4. Das Verfahren zur Herstellung eines Metall-Harz-Verbundwerkstoffs gemäß einem der Ansprüche 1 bis 3, wobei
die Form eine Aussparung aufweist und der Schritt des Anbringens des Trägerelements das Einsetzen des Stützelements in die Aussparung der Form beinhaltet.

5. Das Verfahren zur Herstellung eines Metall-Harz-Verbundwerkstoffs gemäß einem der Ansprüche 1 bis 4, wobei
eine Temperatur der Form im Integrationsschritt in der Nähe eines Teils, in dem die Metallplatte und das Trägerelement miteinander in Kontakt kommen, höher ist als in der Umgebung davon.

6. Das Verfahren zur Herstellung eines Metall-Harz-Verbundwerkstoffs gemäß einem der Ansprüche 1 bis 5, wobei
der Integrationsschritt die Integration durch ein Formgebungsverfahren durchführt, das aus einer Gruppe ausgewählt ist, die aus einem Spritzgießverfahren, einem Spritzpressverfahren, einem RTM-Verfahren und einem LFT-D-Formgebungsverfahren besteht.

## Revendications

1. Procédé pour fabriquer un composite métal-résine incluant une plaque de métal et une résine thermoplastique qui couvre directement au moins une partie d'une surface de la plaque de métal, le procédé comprenant :
une étape de positionnement d'élément de soutien de positionnement d'un élément de soutien en résine pour soutenir la plaque de métal, dans un moule ;
une étape de positionnement de plaque de métal de positionnement de la plaque de métal sur l'élément de soutien ; et
une étape d'intégration d'intégration de la résine thermoplastique qui est appliquée à un côté d'élément de soutien de la plaque de métal, de l'élément de soutien et de la plaque de métal, dans un corps dans le moule,
**caractérisé en ce que**
l'étape d'intégration implique une pression de la plaque de métal sur le moule par l'élément de soutien pour fixer la plaque de métal.

2. Le procédé de fabrication du composite métal-résine selon la revendication 1, dans lequel l'élément de soutien maintient un espace entre le moule et la plaque de métal pour constituer une cavité.

3. Le procédé de fabrication du composite métal-résine selon la revendication 1 ou 2, dans lequel l'étape de positionnement d'élément de soutien implique un positionnement direct de l'élément de soutien dans le moule.

4. Le procédé de fabrication du composite métal-résine selon l'une quelconque des revendications 1 ou 3, dans lequel le moule présente une cavité, et l'étape de positionnement d'élément de soutien implique une insertion de l'élément de soutien dans la cavité du moule.

5. Le procédé de fabrication du composite métal-résine selon l'une quelconque des revendications 1 à 4, dans lequel une température du moule à l'étape d'intégration est supérieure à proximité d'une partie où la plaque de métal et l'élément de soutien entrent en contact l'un avec l'autre, qu'aux alentours de celle-ci.

6. Le procédé de fabrication du composite métal-résine selon l'une quelconque des revendications 1 à 5, dans lequel l'étape d'intégration réalise une intégration par un procédé de moulage qui est sélectionné dans un groupe constitué d'un procédé de moulage par injection, d'un procédé de moulage par presse à injection, d'un procédé RTM (Resin Transfer Molding) et d'un procédé de moulage LFT-D (Long Fiber Thermoplastic - Direct).
